# EUROPÄISCHE PATENTSCHRIFT

(11) **EP 3 833 554 B1**
(45) Veröffentlichungstag und Bekanntmachung des Hinweises auf die Patenterteilung: **07.09.2022**
(21) Anmeldenummer: 19735550.6
(22) Anmeldetag: 02.07.2019
(51) Int. Cl.: B60C 19/00, B60C 5/14, B29C 73/16, B29D 30/06, B29C 73/20

(54) **SELBSTABDICHTENDER FAHRZEUGLUFTREIFEN MIT DICHTMITTELLAGE UND VERFAHREN ZU DESSEN HERSTELLUNG**
SELFSEALANT PNEUMATIC TIRE COMPRISING A LAYER OF SEALANT AND METHODE FOR PRODUCING SAME
PNEUMATIQUE DE VÉHICULE À ÉTANCHÉITÉ INTRINSÈQUE ET SON PROCÉDÉ DE FABRICATION

(30) Priorität: 10.08.2018 DE 102018213480
(43) Veröffentlichungstag der Anmeldung: 16.06.2021
(73) Patentinhaber: Continental Reifen Deutschland GmbH, 30165 Hannover (DE)
(72) Erfinder: GUARDALABENE, Joe, 30165 Hannover (DE)
(74) Vertreter: Continental Corporation
(86) Internationale Anmeldenummer: PCT/EP2019/067650
(87) Internationale Veröffentlichungsnummer: WO 2020/030348

(56) Entgegenhaltungen:
- WO-A1-2017/163219
- WO-A1-2018/141454
- JP-A- 2011 020 479

## Beschreibung

Die Erfindung betrifft einen selbstabdichtenden Fahrzeugluftreifen mit Dichtmittellage und ein Verfahren zu dessen Herstellung.

Selbstabdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper (das Einstichobjekt) vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus.

Es ist ebenfalls bekannt, dass Fahrzeugreifen mit Geräuschabsorbern ausgestattet werden können, um Fahrgeräusche zu dämpfen. Ein Fahrzeugluftreifen umfassend einen Geräuschabsorber in Form eines Schaumstoffrings an der Reifeninnenfläche ist aus der DE 10 2007 028932 A1 und der WO 2015149959 A1 bekannt. Der Geräuschabsorber reduziert die Luftschwingung im Reifen und führt zu einer Verbesserung des Geräuschverhaltens im Fahrzeug. Der Schaumstoffring besteht aus offenzelligem Schaumstoff und wird auch als "Innenabsorber" bezeichnet. Der Geräuschabsorber ist gemäß der Offenbarung der DE 10 2007 028932 A1 mittels eines klebrigen Dichtmittels an die Reifeninnenfläche angebracht. Die JP 2011020479 A offenbart einen Fahrzeugluftreifen, der ein Dichtmittel und ein radial innen an dem Dichtmittel befestigtes, schallabsorbierendes Schaummaterial aufweist, wobei das Dichtmittel teilweise in das Schaummaterial eingedrungen ist.

Der vorliegenden Erfindung liegt die Aufgabe zugrunde, ausgehend vom Stand der Technik einen Fahrzeugluftreifen enthaltend ein Dichtmittel bereitzustellen, welcher verbesserte Eigenschaften hinsichtlich der Geräuschabsorption bei zumindest gleicher Abdichtwirkung aufweist. Der erfindungsgemäße Fahrzeugluftreifen soll zudem vergleichsweise einfach hergestellt sein.

Gelöst wird diese Aufgabe durch den erfindungsgemäßen selbstabdichtenden Fahrzeugluftreifen gemäß Anspruch 1 und das erfindungsgemäße Verfahren zu dessen Herstellung gemäß Anspruch 10.

Dadurch, dass der selbstabdichtende Fahrzeugluftreifen wenigstens ein erstes Dichtmittel und wenigstens ein zweites Dichtmittel aufweist, welches eine Dichte von mehr als 1,00 g/cm³ aufweist, ist er gleichzeitig selbstabdichtend und geräuschabsorbierend ausgestaltet. Hierbei muss aufgrund der zweiten Dichtmittellage kein zusätzlicher Geräuschabsorber in Form eines Schaumstoffs in einem zusätzlichen Verfahrensschritt an zusätzlichen Vorrichtungen aufgetragen werden. Gleichzeitig ist der Reifen aufgrund der ersten Dichtmittellage weiterhin selbstabdichtend.

So beeinflusst die Dichte und Zusammensetzung des Dichtmittels der zweiten Dichtmittellage das Fließverhalten und die Klebrigkeit des Dichtmittels der ersten Dichtmittelage nicht oder nicht signifikant.

Das Dichtmittel der ersten Dichtmittellage wird bei dem erfindungsgemäßen Verfahren auf die radial innere Fläche des Fahrzeugluftreifens aufgetragen. Die zweite Dichtmittellage wird auf die erste Dichtmittellage aufgetragen und zwar so, dass die zweite Dichtmittellage in den Bereichen, in denen sich erste und zweite Dichtmittellage berühren, dann den Fahrzeugreifen nach radial innen begrenzt. Hierbei ist es aber auch denkbar, dass nicht die gesamte nach radial innen gerichtete Fläche der ersten Dichtmittellage mit der zweiten Dichtmittellage bedeckt ist.

"Radial innen" bedeutet in radialer Richtung nach innen, also in entgegengesetzter Richtung des Laufstreifens, der die radial äußerste Schicht des Fahrzeugluftreifens darstellt.

Die erste Dichtmittellage ist somit - zumindest überwiegend in Projektion radial innerhalb des Laufstreifens - zwischen der innersten Schicht des Fahrzeugluftreifens, meist der luftdicht ausgeführten Innenschicht, und der zweiten Dichtmittellage angeordnet.

Es ist bei dem erfindungsgemäßen Verfahren prinzipiell auch denkbar, dass zunächst gemäß Schritt c) das Auftragen der zweiten Dichtmittellage auf die erste Dichtmittellage erfolgt und im Anschluss die erste Dichtmittellage (dann schon im Verbund mit der zweiten) gemäß Schritt b) auf die radial innere Fläche des Fahrzeugluftreifens aufgetragen wird.

Bevorzugt ist es allerdings, wenn die Schritte a) bis c) in zeitlicher Abfolge durchgeführt werden, sodass mit Schritt b) nur die erste Dichtmittellage (ohne Verbund zur zweiten) auf die radial innere Fläche des Fahrzeugluftreifens aufgetragen wird.

Dadurch, dass die geräuschoptimierte Schicht in Gestalt der zweiten Dichtmittelage ebenfalls ein Dichtmittel ist, ergeben sich Vorteile bei der Herstellung des erfindungsgemäßen Fahrzeugluftreifens. Insbesondere sind keine zusätzliche Vorrichtung oder weitere Prozessschritte notwendig, in dem ein Geräuschabsorber aufgebracht wird. Für das Aufbringen der ersten und der zweiten Dichtmittellage können die gleichen Vorrichtungen verwendet werden.

Besonders vorteilhaft ist es, wenn das Auftragen Schritt c) zeitlich unmittelbar nach Schritt b) erfolgt.

Damit entfällt insbesondere eine Zwischenlagerung des Fahrzeugluftreifens.

Bevorzugt beträgt die Gesamtdicke aller Dichtmittellagen in radialer Richtung von 2 bis 10 mm, besonders bevorzugt 3 bis 9 mm, ganz besonders bevorzugt 4 bis 6 mm.

Die Gesamtdicke wird dabei in radialer Richtung senkrecht zur axialen Richtung gemessen.

Die Dicke der ersten Dichtmittellage beträgt dabei bevorzugt mehr als 3 mm, insbesondere 3,5 mm oder mehr.

Die Dichtmittellagen können sämtliche Dickenverhältnisse untereinander aufweisen. Beispielsweise kann das Verhältnis der Dicken der ersten Lage zur Dicke der zweiten Lage 5 zu 95 bis 95 zu 5 betragen.

Beispielsweise und bevorzugt beträgt das genannte Verhältnis der Dicken der ersten Lage zur Dicke der zweiten Lage von 90 zu 10 bis 55 zu 45, besonders bevorzugt 60 zu 10 bis 60 zu 40, ganz besonders bevorzugt 80 zu 20 bis 60 zu 40.

Somit ist gemäß dieses bevorzugten Beispiels die erste Dichtmittellage dicker als die zweite Dichtmittellage. Hierdurch ist, insbesondere im Hinblick auf die oben genannten Gesamtdicken, ausreichend Dichtmittel in der ersten Dichtmittellage vorhanden, um im Pannenfall ein ausreichendes Fließverhalten des Dichtmittels der ersten Lage in die Einstichstelle zu ermöglichen. Gleichzeitig ist die zweite Dichtmittellage dick genug, um eine ausreichende Geräuschabsorption zu erzielen und gleichzeitig nicht zu dick um das Reifengewicht nicht unnötig zu erhöhen. Ein signifikant erhöhtes Reifengewicht würde sich auf das Rollwiderstandsverhalten auswirken.

Die (in erhöhtem Maße) geräuschabsorbierenden Eigenschaften des zweiten Dichtmittels und damit des erfindungsgemäßen Fahrzeugluftreifens resultieren aus der vergleichsweise hohen Dichte des Dichtmittels der zweiten Dichtmittellage von mehr als 1,00 g/cm³. Das Dichtmittel der ersten Dichtmittellage weist dabei eine Zusammensetzung auf mit der es insbesondere eine Dichte von weniger als 1,00 g/cm³ aufweist, beispielsweise 0,96 g/cm³, welche aus im Stand der Technik bekannten Zusammensetzungen von Dichtmitteln selbstabdichtender Fahrzeugluftreifen resultiert.

Die Dichte des Dichtmittels der zweiten Dichtmittellage beträgt bevorzugt 1,00 g/cm³ bis 2,00 g/cm³, besonders bevorzugt 1,00 g/cm³ bis 1,5 g/cm³, ganz besonders bevorzugt 1,00 g/cm³ bis 1,3 g/cm³, beispielsweise 1,01 bis 1,15 g/cm³. Die im Vergleich zum ersten Dichtmittel erhöhte Dichte des Dichtmittels der zweiten Dichtmittellage kann durch die Zusammensetzung der Bestandteile eingestellt werden.

Gemäß besonders vorteilhafter Ausführungsformen der Erfindung erfolgt dies durch die Auswahl von Art und Menge an enthaltenem Füllstoff.

Gemäß einer bevorzugten Ausführungsform der Erfindung enthält das Dichtmittel der zweiten Dichtmittellage wenigstens einen Füllstoff A mit einer Dichte von 2,9 bis 15 g/cm³, bevorzugt von 3,5 bis 15 g/cm³, besonders bevorzugt von 3,5 bis 13 g/cm³. Gemäß vorliegender Erfindung wird ein Füllstoff mit einer Dichte von 2,9 bis 15 g/cm³ als ein "Füllstoff des Typs A" oder kurz "Füllstoff A" bezeichnet. Ein Füllstoff des Typs A weist mit einer Dichte von 2,9 bis 15 g/cm³ eine vergleichsweise hohe Dichte auf (*engl.* "high density filler").

Gemäß vorteilhafter Ausführungsformen der Erfindung beträgt die Menge an enthaltenem Füllstoff mit einer Dichte von 2,9 bis 15 g/cm³, also die Menge an Füllstoff(en) des Typs A, von 5 bis 30 Gew.-%.

Die Mengenangaben des Füllstoffs beziehen sich im Rahmen der vorliegenden Erfindung auf die Zusammensetzung des Dichtmittels der zweiten Dichtmittellage, welches den wenigstens einen Füllstoff enthält.

Mit diesen Dichte- und Mengenbereichen ist es möglich, eine Geräuschreduzierung zu erzielen, wobei gleichzeitig die Menge an Füllstoff nicht zu hoch wird, sodass wesentliche Eigenschaften des Dichtmittels, wie insbesondere die Fließfähigkeit und die Klebrigkeit, nicht negativ beeinträchtigt sind. Somit ist es möglich eine Geräuschreduzierung zu erzielen, ohne dass sich die Zusammensetzung des zweiten Dichtmittels auf das Fließverhalten des ersten Dichtmittels negativ auswirkt.

Hierbei kann die Menge des wenigstens einen Füllstoffs A mit einer Dichte von z. B. 7 bis 15 g/cm³, insbesondere 8 bis 13 g/cm³, im unteren Bereich gewählt werden, wie insbesondere 5 bis 15 Gew.-%, wie beispielsweise 5 bis 10 Gew.-%. Durch die Verwendung von Füllstoffen mit einer Dichte im oberen Bereich des erfindungsgemäßen Dichtebereiches ist es möglich, eine vergleichsweise geringe Menge des Füllstoffs zu verwenden, wodurch sich eine Kostenersparnis und eine vergleichsweise einfache Herstellung des Dichtmittels der zweiten Dichtmittellage und damit des erfindungsgemäßem Fahrzeugluftreifens ergeben.

Es können auch zwei oder mehrere Füllstoffe des Typs A in dem Dichtmittel der zweiten Dichtmittellage enthalten sein. Im Falle eines Gemisches aus wenigstens zwei verschiedenen Füllstoffen des Typs A beträgt die Gesamtmenge an derartigen Füllstoffen dann bis zu 30 Gew.-%.

Durch ein Gemisch von wenigstens zwei verschiedenen Füllstoffen im erfindungsgemäßen Dichtebereich können die Eigenschaften des Dichtmittels, je nach Anforderungen fein eingestellt werden. Dabei kann insbesondere der Frequenzbereich der Geräuschabsorption durch einen breiteren Dichtebereich der enthaltenen Füllstoffe verbreitert werden. Somit können verschiedene Geräuschfrequenzen mit einem Breitband an Dichten abgedeckt werden.

Die Dichteangabe der Füllstoffe bezieht sich auf die Dichte des Füllstoffs, wie er als Rohmaterial dem Dichtmittel der zweiten Dichtmittellage zugesetzt wird. Die Dichte wird insbesondere gemäß dem Archimedes-Prinzip bestimmt.

Mit einem oberen Mengenbereich bis zu 30 Gew.-% ist es möglich eine breite Vielfalt an Füllstoffen im genannten Dichtebereich einzusetzen und miteinander zu kombinieren. Dabei werden insbesondere Füllstoffe mit einer Dichte von 2,9 bis 13 g/cm³ verwendet, welche ökonomisch vorteilhaft sind und sich vergleichsweise (im Vergleich zu Füllstoffen mit einer höheren Dichte) einfach in dem Dichtmittel dispergieren lassen und vergleichsweise kostengünstig sind.

Für den Fall einer Dichte von 2,9 bis 6 g/cm³ beträgt die Menge insbesondere 7 bis 30 Gew.-%, beispielsweise bevorzugt 7 bis 25 Gew.-%, beispielsweise besonders bevorzugt 20 bis 25 Gew.-%.

Prinzipiell sind alle Füllstoffe A mit einer Dichte von 2,9 bis 15 g/cm³ erfindungsgemäß umfasst. Mit einer derartigen Dichte weisen die Füllstoffe eine größere Dichte auf als Füllstoffe, die im Stand der Technik in Dichtmitteln verwendet werden, wie insbesondere Industrieruße mit einer Dichte von 1,8 bis 2,1 g/cm³.

Auch Kieselsäuren, welche als Füllstoff für Reifenmischungen bekannt sind, weisen beispielsweise eine Dichte von ca. 2 bis 2,8 g/cm³ auf.

Der wenigstens eine Füllstoff A ist gemäß bevorzugter Ausführungsformen ausgewählt aus Metallverbindungen, insbesondere Metalloxiden, Metallcarbonaten und Metallsulfaten sowie Kompositfüllstoffen, die aufgebaut sind aus Metallverbindungen, insbesondere Metalloxiden, Metallcarbonaten und/oder Metallsulfaten, die eine Beschichtung, insbesondere eine Polymerhülle, aufweisen. Metallbasierte Füllstoffe sind auf einem hohen Qualitätsniveau verfügbar, sodass die Eigenschaften des Dichtmittels nicht negativ beeinträchtigt werden. Die genannten Kompositfüllstoffe weisen zudem den Vorteil auf, dass durch die Polymerhülle chemische Reaktionen der Metallverbindungen, wie Metalloxide, Metallcarbonate und/oder Metallsulfate, mit den Chemikalien im Dichtmittel, insbesondere den Vernetzungschemikalien wie z. B. Peroxiden, vermieden werden. Bei der Polymerhülle kann es sich beispielsweise um (Meth-)Acrylate, Polyanilin, Polyamide wie z. B. Nylon, Polyaramide, Polyester wie z. B. PET (Polyethylenterephthalat), Polyethylen, Polypropylen, oder höhere Homologe der Polyalkylene, oder Polysäuren wie Polymilchsäure, handeln. Derartige Kompositfüllstoffe mit einer vergleichsweise hohen Dichte von 5 bis 11 g/cm³ sind beispielsweise von der Firma Ecomass Technologies erhältlich.

Gemäß einer bevorzugten Ausführungsform der Erfindung umfasst der wenigstens eine Füllstoff A wenigstens eine Metallverbindung, insbesondere wenigstens ein Metalloxid und/oder wenigstens ein Metallcarbonat und/oder wenigstens ein Metallsulfat und/oder wenigstens ein Kompositfüllstoff einer Metallverbindung, insbesondere der genannten Metallverbindungen, mit einer Polymerhülle. Prinzipiell sind alle Metalloxide mit einer Dichte von 2,9 bis 15 g/cm³ erfindungsgemäß umfasst, wie insbesondere Eisenoxid (Dichte 5,24 g/cm³), Titandioxid (Dichte 4,2 g/cm³), Calciumoxid (Dichte 3,35 g/cm³), Magnesiumoxid (Dichte 3,6 g/cm³), Aluminiumoxid (Dichte 3,95 g/cm³), Zinkoxid (Dichte 5,6 g/cm³), Bariumoxid (Dichte 5,72 g/cm³).

Ein beispielhaftes Metallcarbonat ist Magnesiumcarbonat (Dichte 3 g/cm³).

Ein Beispiel für ein Metallsulfat ist Bariumsulfat (Dichte 4,5 g/cm³).

Gemäß einer bevorzugten Ausführungsform der Erfindung umfasst der Füllstoff A wenigstens ein Eisenoxid, wie beispielsweise Eisen(II,III)-oxid (Fe₃O₄, Magnetit).

Gemäß einer bevorzugten Ausführungsform der Erfindung umfasst der Füllstoff A Bariumoxid.

Einige Oxide sind als Vulkanisationshilfsmittel (Aktivatoren) bekannt, wie insbesondere Zinkoxid, aber auch Magnesiumoxid. Diese Oxide sind erfindungsgemäß umfasst, solange sie eine Dichte von 2,9 bis 15 g/cm³ aufweisen, und ihre Menge(n) zählen zu der Gesamtmenge an Füllstoffen des Typs A.

Gemäß einer vorteilhaften Ausführungsform der Erfindung enthält das Dichtmittel Zinkoxid (ZnO) in einer Menge von bis zu 1 Gew.-%, insbesondere 0,2 bis 1 Gew.-%.

Gemäß einer weiteren vorteilhaften Ausführungsform der Erfindung enthält das Dichtmittel Zinkoxid (ZnO) in einer Menge von mehr als 1 Gew.-%, insbesondere bevorzugt 1,5 bis 20 Gew.-%, wiederum bevorzugt 3 bis 20 Gew.-%, beispielsweise 5 bis 15 Gew.-%, und ist damit vorrangig nicht als Vulkanisationsagenz enthalten sondern erfindungsgemäß als geräuschabsorbierender Füllstoff.

Gemäß einer weiteren vorteilhaften Ausführungsform der Erfindung enthält das Dichtmittel Magnesiumoxid (MgO) in einer Menge von mehr als 1 Gew.-%, insbesondere bevorzugt 1,5 bis 20 Gew.-%, wiederum bevorzugt 3 bis 20 Gew.-%, beispielsweise 5 bis 15 Gew.-%, und ist damit nicht als Vulkanisationsagenz enthalten sondern erfindungsgemäß als geräuschabsorbierender Füllstoff.

Gemäß vorteilhafter Ausführungsformen ist die Metallverbindung, insbesondere Metalloxid, Metallcarbonat und/oder Metallsulfat, des wenigstens einen Füllstoffs A ausgewählt aus der Gruppe bestehend aus Eisenoxid, Titandioxid, Calciumoxid, Magnesiumoxid, Aluminiumoxid, Zinkoxid, Bariumoxid, Magnesiumcarbonat und Bariumsulfat. Diese Auswahl gilt auch für die oben beschriebenen Kompositfüllstoffe.

Gemäß vorteilhafter Ausführungsformen der Erfindung enthält das Dichtmittel der zweiten Dichtmittellage genau einen Füllstoff (bzw. genau eine Füllstoffart) des Typs A. Hierdurch ergibt sich eine vergleichsweise einfache Herstellbarkeit des Dichtmittels, insbesondere bei der Dosierung, und damit des erfindungsgemäßen Fahrzeugluftreifens.

Gemäß weiterer vorteilhafter Ausführungsformen enthält das Dichtmittel der zweiten Dichtmittellage wenigstens zwei verschiedene Füllstoffe des Typs A. Gemäß einer bevorzugten Ausführungsform der Erfindung enthält es hierbei ein Gemisch von Eisenoxid mit wenigstens einem weiteren Füllstoff A.

Gemäß einer vorteilhaften Ausführungsform der Erfindung enthält das Dichtmittel der zweiten Dichtmittellage einen Füllstoff A und keinen weiteren Füllstoff, d. h. es sind 0 Gew.-% weiterer Füllstoff enthalten. Hierdurch muss nur ein Füllstoff bei der Herstellung zu dosiert werden.

Gemäß weiterer vorteilhafter Ausführungsformen der Erfindung enthält das Dichtmittel der zweiten Dichtmittellage wenigstens einen Füllstoff B mit einer Dichte von 1,5 bis 2,8 g/cm³. Gemäß vorliegender Erfindung wird ein Füllstoff mit einer Dichte von 1,5 bis 2,8 g/cm³ als ein "Füllstoff des Typs B" oder kurz "Füllstoff B" bezeichnet.

Prinzipiell kann es sich bei dem Füllstoff B um alle Füllstoffe mit einer Dichte von 1,5 bis 2,8 g/cm³ handeln, wie insbesondere Ruße, Kieselsäuren und sonstige Füllstoffe im genannten Dichtebereich, wie beispielsweise Carbonate mit einer vergleichsweise geringen Dichte wie Calciumcarbonat (Dichte je nach Modifikation 2,6 bis 2,8 g/cm³).

Gemäß besonders vorteilhafter Ausführungsformen der Erfindung ist der Füllstoff B ausgewählt aus Rußen und Kieselsäuren, wobei insbesondere gefällte Kieselsäuren gemeint und bevorzugt sind, die als Füllstoffe für Reifenkautschukmischungen bekannt sind.

Gemäß vorteilhafter Ausführungsformen der Erfindung umfasst der Füllstoff B des Dichtmittels der zweiten Dichtmittellage wenigstens einen Ruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert. Ferner ist ein Gemisch der genannten Füllstoffe B denkbar und bevorzugt, wie insbesondere wenigstens ein Ruß in Kombination mit wenigstens einer Kieselsäure, wobei sich ebenfalls die genannten Vorteile ergeben.

Gemäß vorteilhafter Ausführungsformen enthält das Dichtmittel wenigstens einen Füllstoff des Typs A und wenigstens einen Füllstoff des Typs B, solange es weiterhin eine Dichte von mehr als 1,00 g/cm³ aufweist. Durch die genannte Kombination von Füllstoff(en) des Typs A und Füllstoff(en) des Typs B können die Eigenschaften Geräuschabsorption, Fließverhalten und Klebrigkeit optimal eingestellt werden.

Gemäß einer vorteilhaften Ausführungsform der Erfindung enthält das Dichtmittel der zweiten Dichtmittellage 5 bis 30 Gew.-%, bevorzugt 5 bis 20 Gew.-%, wenigstens eines Füllstoffs A und 0,1 bis 15 Gew.-%, bevorzugt 0,1 bis 10 Gew.-%, besonders bevorzugt 2 bis 10 Gew.-% wenigstens eines Füllstoffs B, insbesondere wenigstens eines Rußes.

Gemäß weiterer vorteilhafter Ausführungsformen der Erfindung enthält das Dichtmittel der zweiten Dichtmittellage Füllstoff(e) des Typs B in einer Menge von 15 Gew.-% oder mehr, wodurch kein Füllstoff des Typs A enthalten sein muss, um eine Dichte des Dichtmittels der zweiten Dichtmittellage von mehr als 1,00 g/cm³ zu erzielen. Hierdurch ergibt sich eine vergleichsweise einfache Herstellung des Dichtmittels und damit des Fahrzeugluftreifens, da nicht verschiedene Füllstoffe abgewogen und zugegeben werden müssen.

Gemäß einer vorteilhaften Ausführungsform der Erfindung enthält das Dichtmittel der zweiten Dichtmittellage 15 bis 50 Gew.-%, bevorzugt 15 bis 40 Gew.-%, beispielsweise 20 bis 35 Gew.-%, wenigstens eines Rußes.

Gemäß einer weiteren vorteilhaften Ausführungsform der Erfindung enthält das Dichtmittel der zweiten Dichtmittellage 15 bis 50 Gew.-%, bevorzugt 15 bis 40 Gew.-%, beispielsweise 17 bis 32 Gew.-%, wenigstens einer Kieselsäure.

Gemäß einer weiteren vorteilhaften Ausführungsform der Erfindung enthält das Dichtmittel der zweiten Dichtmittellage eine Gesamtmenge von 15 bis 50 Gew.-%, bevorzugt 15 bis 40 Gew.-%, beispielsweise 23 bis 33 Gew.-%, wenigstens eines Rußes und wenigstens einer Kieselsäure.

Als Ruße sind im Rahmen der vorliegenden Erfindung prinzipiell alle dem Fachmann bekannten Ruß-Typen denkbar. Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist. Gemäß einer weiteren bevorzugten Ausführungsform der Erfindung wird ein Ruß des Typs N326 verwendet. Es ist auch ein Gemisch von zwei oder mehreren Rußen denkbar.

Gemäß einer weiteren bevorzugten Ausführungsform der Erfindung umfasst der weitere Füllstoff wenigstens eine Kieselsäure (engl. "silica").

Hierdurch wird eine optimale Verstärkung des Dichtmittels erzielt und eine gute Viskositätskontrolle und -einstellung ermöglicht. Zudem wird mit wenigstens einer Kieselsäure die Kohäsion des Dichtmittels erhöht und die Klebrigkeit wird während des Herstellverfahrens erniedrigt. Gleichzeitig werden die Ortsfestigkeit und die Reißeigenschaften des Dichtmittels verbessert.

Es ist auch ein Gemisch von zwei oder mehreren Kieselsäuren denkbar. Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay) verwendet werden.

Bei dem Dichtmittel der ersten und der zweiten Dichtmittellage kann es sich unabhängig voneinander um alle geeigneten und dem Fachmann bekannten

Dichtmittelzusammensetzungen handeln, wie beispielsweise auf Silikonbasis, oder auf Basis von Polyurethan oder basierend auf der Vernetzung eines Kautschuks und/oder eines Polyolefins.

Die Zusammensetzungen können dabei prinzipiell die gleichen Bestandteile umfassen, solange die zweite Dichtmittellage eine Dichte von mehr als 1,00 g/cm³ aufweist.

Das Dichtmittel der ersten Dichtmittellage weist dabei insbesondere und bevorzugt eine Dichte von weniger als 1,00 g/cm³ auf und ist dabei gemäß vorteilhafter

Ausführungsformen frei von Füllstoffen des Typs A. Das bedeutet, dass bei der Herstellung des erfindungsgemäßen Fahrzeugluftreifens der Dichtmittelzusammensetzung der ersten Dichtmittellage gemäß vorteilhafter Ausführungsformen 0 Gew.-% Füllstoffe A zugegeben werden.

Das Dichtmittel der ersten Dichtmittellage kann gemäß vorteilhafter Ausführungsformen aber wenigstens einen Füllstoff des Typs B, bevorzugt wenigstens einen Ruß und/oder wenigstens eine Kieselsäure, enthalten. Die Menge an Füllstoffen des Typs B in dem Dichtmittel der ersten Dichtmittellage beträgt dann bevorzugt 0,1 bis 2,5 Gew.-%, besonders bevorzugt 0,1 bis 2 Gew.-%.

Gemäß vorteilhafter Ausführungsformen der Erfindung umfasst der Füllstoff B des Dichtmittels der ersten Dichtmittellage wenigstens einen Ruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Ferner ist ein Gemisch der genannten Füllstoffe B denkbar und bevorzugt, wie insbesondere wenigstens ein Ruß in Kombination mit wenigstens einer Kieselsäure, wobei sich ebenfalls die genannten Vorteile ergeben.

In sämtlichen Ausführungsformen der Erfindung kann das Dichtmittel der ersten Dichtmittellage und/oder der zweiten Dichtmittellage wenigstens einen weiteren Füllstoff enthalten, welcher nicht bereits genannt ist.

Hierbei sind weitere verstärkende und nicht verstärkende Füllstoffe, insbesondere Siliziumoxid basierte Füllstoffe, wie Silikate oder Sand, denkbar sowie ggf. verstärkende Füllstoffe wie z.B. Graphit und Graphene und sogenannte "carbon-silica dual-phase filler".

Bevorzugt umfasst die erste und/oder die zweite Dichtmittellage ein Dichtmittel, welches auf der Vernetzung eines Kautschuks und/oder Polyolefins basiert. Es ist aber auch denkbar, dass andere Zusammensetzungen als Dichtmittel verwendet werden.

Im Fall von drei oder mehr Dichtmittellagen ist es gemäß einer vorteilhaften Ausführungsform der Erfindung ebenfalls bevorzugt, wenn wenigstens eine, bevorzugt wenigstens zwei, bevorzugt wenigstens drei, besonders bevorzugt sämtliche, der Dichtmittelagen auf der Vernetzung eines Kautschuks und/oder Polyolefins basieren. Auch hier ist jedoch jegliche Kombination mit anderen Dichtmitteln in einer oder mehrerer der Dichtmittellagen denkbar.

Gemäß einer vorteilhaften Ausführungsform der Erfindung umfassen die erste und die zweite Dichtmittellage ein Dichtmittel, welches auf der Vernetzung eines Kautschuks und/oder Polyolefins basiert.

Im Folgenden werden die möglichen und bevorzugten Bestandteile eines Dichtmittels, welches auf der Vernetzung eines Kautschuks und/oder Polyolefins basiert, erläutert. Sämtliche Ausführungen gelten sowohl für die erste als auch die zweite Dichtmittellage, sofern sie wenigstens ein Dichtmittel aufweisen, welches auf der Vernetzung eines Kautschuks und/oder Polyolefins basiert.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Reifendichtmittels und später bei der Anwendung im Reifen besonders gut geeignet. Besonders bevorzugt wird wenigstens Butylkautschuk (IIR) verwendet. Butylkautschuk eignet sich besonders gut, da er eine vergleichsweise hohe Luftdichtigkeit aufweist.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können. Geeignete Polybutene, auch Polyisobutene genannt, sind beispielsweise unter den Handelsnamen Indopol^{®} Polybutene der Firma INEOS Capital Limited erhältlich.

Es ist auch ein Gemisch wenigstens eines Polybutens mit wenigstens einem weiteren Polyolefin denkbar.

Dem Fachmann ist klar, dass die genannten Bestandteile im vernetzten Dichtmittel zumindest teilweise in chemisch veränderter Form, insbesondere als Derivate, vorliegen.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind. Gemäß weiterer beispielhafter Ausführungsformen kann das Dichtmittel der ersten und/oder der zweiten Dichtmittellage insbesondere natürliches und/oder synthetisches Polyisopren, bevorzugt natürliches Polyisopren, enthalten. Gemäß einer bevorzugten Ausführungsform enthält kann das Dichtmittel der ersten und der zweiten Dichtmittellage insbesondere natürliches und/oder synthetisches Polyisopren, bevorzugt natürliches Polyisopren.

Es kann beispielsweise fester Naturkautschuk (NR) mit flüssigem Polyisopren in Kombination verwendet werden.

Beispielsweise kann das Dichtmittel Naturkautschuk und Styrol-Butadien-Kautschuk (SBR), beispielsweise ESBR (emulsionspolymerisierten Styrol-Butadien-Kautschuk) enthalten. Die Vernetzung kann auf Peroxiden basieren und/oder auf einer Schwefelvernetzung. Beispielsweise kann Schwefel in Kombination mit peroxidischen Agenzien, wie beispielsweise "VAROX-Organic-Peroxide-Crosslinking-Agents", der Firma Vanderbilt Chemicals, LLC verwendet werden. Das Verhältnis von NR zu ESBR beträgt beispielsweise 30 bis 40 zu 60 bis 70 Gew.-%.

Gemäß weiteren beispielhaften Ausführungsformen umfasst die erste Dichtmittelage und/oder die zweite Dichtmittellage ein Dichtmittel, welches ein silikonbasiertes

Dichtmittel ist. Gemäß einer bevorzugten Ausführungsform umfasst die erste Dichtmittelage und die zweite Dichtmittellage ein Dichtmittel, welches ein silikonbasiertes Dichtmittel ist.

Ferner ist es denkbar, dass das Dichtmittel der ersten und/oder der zweiten Dichtmittellage wenigstens ein Polyurethan enthält. Gemäß einer bevorzugten Ausführungsform enthält das Dichtmittel der ersten und der zweiten Dichtmittellage wenigstens ein Polyurethan. Das Dichtmittel der ersten und/oder der zweiten Dichtmittellage kann prinzipiell auch eine Kombination der genannten Dichtmittelsysteme enthalten.

Das Dichtmittel kann ferner weitere Bestandteile enthalten, wie insbesondere, Klebrigmacher, Weichmacher, wie z. B. Öl(e), sowie gegebenenfalls weitere Zusatzstoffe, wie z. B. Farbpigmente und/oder Schwefel.

Das Dichtmittel der ersten und/oder der zweiten Dichtmittellage, bevorzugt beider Dichtmittellagen, enthält gemäß vorteilhafter Ausführungsformen wenigstens einen Klebrigmacher, und zwar insbesondere für den Fall, dass das jeweilige Dichtmittel nicht bereits aufgrund der enthaltenen Bestandteile, insbesondere der Polymere eine ausreichende Klebrigkeit aufweist. Unter "Klebrigmacher" wird prinzipiell jede Substanz verstanden, die die Klebrigkeit des Dichtmittels erhöht.

Gemäß vorteilhafter Ausführungsformen der Erfindung handelt es sich bei dem Klebrigmacher um wenigstens ein Kohlenwasserstoffharz.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene. Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln.

Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer bevorzugten Ausführungsform der Erfindung handelt es sich bei dem Kohlenwasserstoffharz um wenigstens ein Harz, welches wenigstens aus C₅-Monomeren aufgebaut ist und dem Fachmann als sogenanntes C₅-Harz bekannt ist. Hiermit werden besonders gute Eigenschaften des Klebemittels, insbesondere ein optimiertes Fließverhalten bei gleichzeitig guter Klebrigkeit, erzielt.

Bei den aliphatischen Cs-Monomeren kann es sich um Monomere der Cs-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.

Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Gemäß vorteilhafter Ausführungsformen der Erfindung enthält das Dichtmittel der ersten und/oder der zweiten Dichtmittellage, bevorzugt beider Dichtmittellagen, 2 bis 20 Gew.-% wenigstens eines Kohlenwasserstoffharzes als Klebrigmacher. Bevorzugt beträgt die Menge des wenigstens einen Kohlenwasserstoffharzes 2 bis 10 Gew.-%. Mit derartigen bevorzugten und besonders bevorzugten Mengen werden die Klebrigkeit und die Viskosität des Klebemittels weiter optimiert.

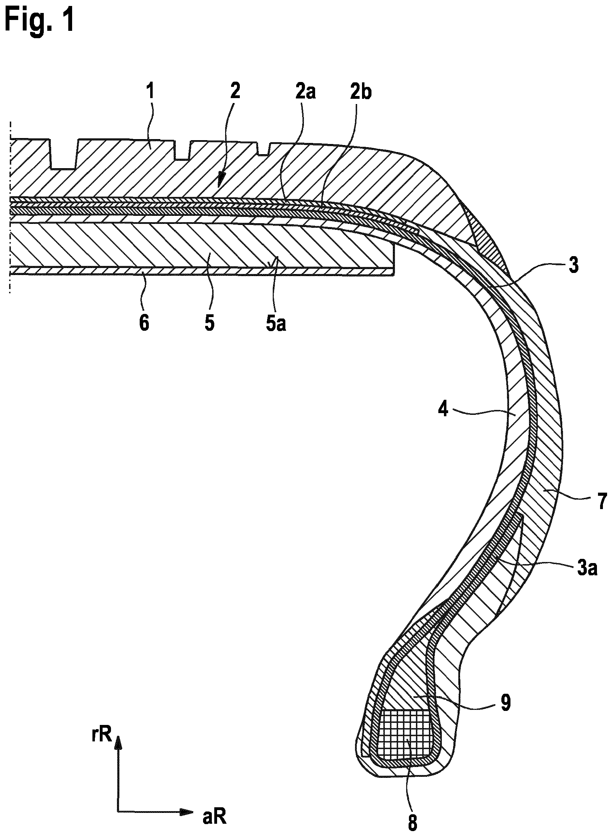

Weitere Einzelheiten der Erfindung werden anhand der Figur 1, die ein schematisches Ausführungsbeispiel darstellt, näher erläutert.

Die wesentlichen Bestandteile, aus welchen sich der erfindungsgemäße Fahrzeugluftreifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 8 und Wulstkernprofile 9 von axial innen nach axial außen herumgeführt ist und im Karkasshochschlag 3a endet, sowie Seitenwände 7. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Selbstdichtung des Fahrzeugluftreifens ist beim erfindungsgemäßen Beispiel durch eine nach der Vulkanisation des Fahrzeugluftreifens nachträglich radial innen umlaufend aufgebrachte Dichtmittellage 5 erhalten. Diese erste Dichtmittellage 5 weist im Wesentlichen die Breite des Gürtelpakets 2 auf und ist im Wesentlichen in dessen Projektion angeordnet und weist einen in der die Reifenachse beinhaltenden Querschnittsebene ausgebildeten Querschnitt mit einer radial nach innen gerichteten in axialer Richtung, im Wesentlichen parallel zum Gürtelpaket, verlaufende Oberfläche 5a auf.

Die Dicke der ersten Dichtmittellage 5 beträgt beispielsweise 3,5 mm und die Dicke der zweiten Dichtmittellage 6 beträgt beispielsweise 1,5 mm.

Das Dichtmittel der ersten Dichtmittellage 5 enthält die folgenden Bestandteile:
- 76 Gew.-% Polybuten
- 3 Gew.-% Kohlenwasserstoffharz
- 12 Gew.-% Butylkautschuk
- 3 Gew.-% N326 Ruß
- 3 Gew.-% Öl
- 2 Gew.-% Vernetzer
- 1 Gew.-% Vernetzungsinitiator.

Gemäß des Beispiels in Figur 1 ist radial innerhalb der Dichtmittellage 5, also auf der radial nach innen gerichteten Oberfläche 5a der Dichtmittellage 5, eine zweite Dichtmittellage 6 angeordnet. Das Dichtmittel der zweiten Dichtmittellage 6 weist eine Dichte von mehr als 1,00 g/cm³ auf und enthält die folgenden Bestandteile:
- 69 Gew.-% Polybuten
- 3 Gew.-% Kohlenwasserstoffharz
- 10 Gew.-% Butylkautschuk
- 10 Gew.-% Bariumoxid
- 2 Gew.-% N326 Ruß
- 3 Gew.-% Öl
- 2 Gew.-% Vernetzer
- 1 Gew.-% Vernetzungsinitiator.

Die Dichtmittelzusammensetzungen können durch bekannte Verfahren und Vorrichtungen hergestellt werden, insbesondere durch intensives Mischen in einem Mischer oder Extruder, insbesondere einem Doppelschneckenextruder.

### Bezugszeichenliste

### (Teil der Beschreibung)

- 1: Laufstreifen
- 2: Gürtelpaket
- 2a: Gürtellage
- 2b: Gürtellage
- 3: Karkasse
- 3a: Karkasshochschlag
- 4: Innenschicht
- 5: Erste Dichtmittellage
- 5a: radial nach innen gerichtete in axialer Richtung, im Wesentlichen parallel zum Gürtelpaket, verlaufende Oberfläche der ersten Dichtmittellage
- 6: Zweite Dichtmittellage
- 7: Seitenwand
- 8: Wulstkern
- 9: Wulstkernprofil

- rR: radiale Richtung
- aR: axiale Richtung

## Patentansprüche

1. Selbstabdichtender Fahrzeugluftreifen umfassend wenigstens eine erste auf der dem Laufstreifen (1) gegenüberliegenden Innenfläche angeordnete Dichtmittellage (5) und wenigstens eine zweite Dichtmittellage (6), wobei die erste Dichtmittellage (5) und die zweite Dichtmittellage (6) radial benachbart zueinander angeordnet sind, **dadurch gekennzeichnet, dass** die zweite Dichtmittellage (6) ein Dichtmittel umfasst, welches eine Dichte von größer als 1,00 g/cm³ aufweist.

2. Fahrzeugluftreifen nach Anspruch 1, **dadurch gekennzeichnet, dass** das Dichtmittel der zweiten Dichtmittellage (6) wenigstens einen Füllstoff A mit einer Dichte von 2,9 bis 15 g/cm³, bevorzugt von 3,5 bis 15 g/cm³, besonders bevorzugt von 3,5 bis 13 g/cm³, enthält.

3. Fahrzeugluftreifen nach Anspruch 2, **dadurch gekennzeichnet, dass** der Füllstoff A ausgewählt ist aus Metallverbindungen, insbesondere Metalloxiden, Metallcarbonaten und Metallsulfaten sowie Kompositfüllstoffen, die aufgebaut sind aus Metallverbindungen, insbesondere Metalloxiden, Metallcarbonaten und/oder Metallsulfaten, die eine Beschichtung, insbesondere eine Polymerhülle, aufweisen.

4. Fahrzeugluftreifen nach Anspruch 3, **dadurch gekennzeichnet, dass** die Metallverbindung, insbesondere Metalloxid, Metallcarbonat und/oder Metallsulfat, des wenigstens einen Füllstoffs A ausgewählt ist aus der Gruppe bestehend aus Eisenoxid, Titandioxid, Calciumoxid, Magnesiumoxid, Aluminiumoxid, Zinkoxid, Bariumoxid, Magnesiumcarbonat und Bariumsulfat.

5. Fahrzeugluftreifen nach einem der vorherigen Ansprüche, **dadurch gekennzeichnet, dass** das Dichtmittel der zweiten Dichtmittellage (6) wenigstens einen Füllstoff B mit einer Dichte von 1,5 bis 2,8 g/cm³ enthält.

6. Fahrzeugluftreifen nach Anspruch 5, **dadurch gekennzeichnet, dass** der Füllstoff B ausgewählt ist aus Rußen und Kieselsäuren.

7. Fahrzeugluftreifen nach einem der vorherigen Ansprüche, **dadurch gekennzeichnet, dass** die erste Dichtmittelage (5) und/oder die zweite Dichtmittellage (6) ein Dichtmittel umfasst, welches auf der Vernetzung eines Kautschuks und/oder Polyolefins basiert.

8. Fahrzeugluftreifen nach einem der vorherigen Ansprüche, **dadurch gekennzeichnet, dass** die erste Dichtmittelage (5) und/oder die zweite Dichtmittellage (6) ein Dichtmittel umfasst, welches wenigstens ein natürliches Polyisopren enthält.

9. Fahrzeugluftreifen nach einem der vorherigen Ansprüche, **dadurch gekennzeichnet, dass** die erste Dichtmittelage (5) und/oder die zweite Dichtmittellage (6) ein Dichtmittel umfasst, welches ein silikonbasiertes Dichtmittel ist.

10. Verfahren zur Herstellung des Fahrzeugluftreifens nach Anspruch 1, wobei es wenigstens die folgenden Schritte umfasst:
a) Bereitstellung eines vulkanisierten Fahrzeugluftreifens; und
b) Auftragen der ersten Dichtmittellage (5) auf die dem Laufstreifen (1) gegenüberliegenden Innenfläche; und
c) Auftragen der zweiten Dichtmittellage (6) auf die erste Dichtmittellage (5).

11. Verfahren nach Anspruch 10, **dadurch gekennzeichnet, dass** Schritt c) zeitlich unmittelbar nach Schritt b) erfolgt.

## Claims

1. Self-sealing pneumatic vehicle tire comprising at least one first sealant layer (5) arranged on the inner surface opposite the tread (1) and at least one second sealant layer (6), wherein the first sealant layer (5) and the second sealant layer (6) are arranged radially adjacent to one another, **characterized in that** the second sealant layer (6) comprises a sealant having a density greater than 1.00 g/cm³.

2. Pneumatic vehicle tire according to Claim 1, **characterized in that** the sealant of the second sealant layer (6) comprises at least one filler A having a density of 2.9 to 15 g/cm³, preferably of 3.5 to 15 g/cm³, particularly preferably of 3.5 to 13 g/cm³.

3. Pneumatic vehicle tire according to Claim 2, **characterized in that** the filler A is selected from metal compounds, in particular metal oxides, metal carbonates and metal sulfates and also composite fillers made up of metal compounds, in particular metal oxides, metal carbonates and/or metal sulfates, comprising a coating, in particular a polymer shell.

4. Pneumatic vehicle tire according to Claim 3, **characterized in that** the metal compound, in particular metal oxide, metal carbonate and/or metal sulfate, of the at least one filler A is selected from the group consisting of iron oxide, titanium oxide, calcium oxide, magnesium oxide, aluminum oxide, zinc oxide, barium oxide, magnesium carbonate and barium sulfate.

5. Pneumatic vehicle tire according to any of the preceding claims, **characterized in that** the sealant of the second sealant layer (6) contains at least one filler B having a density of 1.5 to 2.8 g/cm³.

6. Pneumatic vehicle tire according to Claim 5, **characterized in that** the filler B is selected from carbon blacks and silicas.

7. Pneumatic vehicle tire according to any of the preceding claims, **characterized in that** the first sealant layer (5) and/or the second sealant layer (6) comprises a sealant based on the crosslinking of a rubber and/or polyolefin.

8. Pneumatic vehicle tire according to any of the preceding claims, **characterized in that** the first sealant layer (5) and/or the second sealant layer (6) comprises a sealant containing at least one natural polyisoprene.

9. Pneumatic vehicle tire according to any of the preceding claims, **characterized in that** the first sealant layer (5) and/or the second sealant layer (6) comprises a sealant which is a silicone-based sealant.

10. Process for producing the pneumatic vehicle tire according to claim 1, wherein said process comprises at least the steps of:
a) providing a vulcanized pneumatic vehicle tire; and
b) applying the first sealant layer (5) on the inner surface opposite the tread (1); and
c) applying the second sealant layer (6) atop the first sealant layer (5).

11. Process according to Claim 10, **characterized in that** step c) is carried out immediately after step b).

## Revendications

1. Pneumatique de véhicule auto-étanchéifiant comprenant au moins une première couche d'agent d'étanchéité (5) disposée sur la surface intérieure opposée à la bande de roulement (1) et au moins une deuxième couche d'agent d'étanchéité (6), la première couche d'agent d'étanchéité (5) et la deuxième couche d'agent d'étanchéité (6) étant disposées de manière radialement adjacente l'une à l'autre, **caractérisé en ce que** la deuxième couche d'agent d'étanchéité (6) comprend un agent d'étanchéité qui a une densité supérieure à 1,00 g/cm³.

2. Pneumatique de véhicule selon la revendication 1, **caractérisé en ce que** l'agent d'étanchéité de la deuxième couche d'agent d'étanchéité (6) contient au moins une charge A d'une densité de 2,9 à 15 g/cm³, de préférence de 3,5 à 15 g/cm³, de manière particulièrement préférée de 3,5 à 13 g/cm³.

3. Pneumatique de véhicule selon la revendication 2, **caractérisé en ce que** la charge A est choisie parmi les composés métalliques, notamment les oxydes métalliques, les carbonates métalliques et les sulfates métalliques, ainsi que les charges composites qui comprennent des composés métalliques, notamment des oxydes métalliques, des carbonates métalliques et/ou de sulfates métalliques qui comportent un revêtement, notamment une enveloppe de polymère.

4. Pneumatique de véhicule selon la revendication 3, **caractérisé en ce que** le composé métallique, notamment l'oxyde métallique, le carbonate métallique et/ou le sulfate métallique, de l'au moins une charge A est choisi dans le groupe comprenant l'oxyde de fer, le dioxyde de titane, l'oxyde de calcium, l'oxyde de magnésium, l'oxyde d'aluminium, l'oxyde de zinc, l'oxyde de baryum, le carbonate de magnésium et le sulfate de baryum.

5. Pneumatique de véhicule selon l'une des revendications précédentes, **caractérisé en ce que** l'agent d'étanchéité de la deuxième couche d'étanchéité (6) contient au moins une charge B d'une densité de 1,5 à 2,8 g/cm³.

6. Pneumatique de véhicule selon la revendication 5, **caractérisé en ce que** la charge B est choisie parmi les noirs de carbone et les silices.

7. Pneumatique de véhicule selon l'une des revendications précédentes, **caractérisé en ce que** la première couche d'agent d'étanchéité (5) et/ou la deuxième couche d'agent d'étanchéité (6) comprennent un agent d'étanchéité qui est basé sur la réticulation d'un caoutchouc et/ou d'une polyoléfine.

8. Pneumatique de véhicule selon l'une des revendications précédentes, **caractérisé en ce que** la première couche d'agent d'étanchéité (5) et/ou la deuxième couche d'agent d'étanchéité (6) comprennent un agent d'étanchéité qui contient au moins un polyisoprène naturel.

9. Pneumatique de véhicule selon l'une des revendications précédentes, **caractérisé en ce que** la première couche d'agent d'étanchéité (5) et/ou la deuxième couche d'agent d'étanchéité (6) comprennent un agent d'étanchéité qui est un agent d'étanchéité à base de silicone.

10. Procédé de fabrication du pneumatique de véhicule selon la revendication 1, ledit procédé comprenant au moins les étapes suivantes :
a) fournir un pneumatique de véhicule vulcanisé ; et
b) appliqué la première couche d'agent d'étanchéité (5) sur la surface intérieure opposée à la bande de roulement (1) ; et
c) appliquer la deuxième couche d'agent d'étanchéité (6) sur la première couche d'agent d'étanchéité (5).

11. Procédé selon la revendication 10, **caractérisé en ce que** l'étape c) est effectuée immédiatement après l'étape b).
